(19) Europäisches Patentamt
European Patent Office
Office européen des brevets

(11) Veröffentlichungsnummer: **0 187 773 B1**

(12) # EUROPÄISCHE PATENTSCHRIFT

(45) Veröffentlichungstag der Patentschrift: **17.05.89**

(51) Int. Cl.⁴: **G 07 B 13/02**, G 02 F 1/13

(21) Anmeldenummer: **85902991.0**

(22) Anmeldetag: **20.06.85**

(86) Internationale Anmeldenummer: **PCT/EP 85/00300**

(87) Internationale Veröffentlichungsnummer: **WO/8600449 (16.01.86 Gazette 86/02)**

(54) **ELEKTRONISCHE ANZEIGEVORRICHTUNG.**

(30) Priorität: **30.06.84 DE 3424239**

(43) Veröffentlichungstag der Anmeldung: **23.07.86 Patentblatt 86/30**

(45) Bekanntmachung des Hinweises auf die Patenterteilung: **17.05.89 Patentblatt 89/20**

(84) Benannte Vertragsstaaten: **AT DE FR GB IT**

(56) Entgegenhaltungen:
**DE-A- 2 739 783**
**DE-A- 2 952 370**
**DE-A- 3 139 203**
**DE-A- 3 247 531**
**FR-A- 2 326 002**
**GB-A- 2 043 358**
**GB-A- 2 116 805**
**US-A- 4 012 117**
**US-A- 4 059 916**
**US-A- 4 247 928**
**US-A- 4 357 061**
**Journal of Electronic Engineering, Band 19, no. 189, September 1982, Tokio, JP, pp. 35-38, T Nakanishi et al.: "G-H Color LCDs for Automotive use" See page 36, column 2, lines 1-9;page 37, column 1, page 29, column 2 line 9; Photo 1; figure 2.**

(73) Patentinhaber: **Mannesmann Kienzle GmbH
Postfach 1640 Heinrich-Hertz-Strasse
D-7730 Villingen-Schwenningen (DE)**

(72) Erfinder: **SCHOLL, Hans-Peter
Zeisigweg 3
7121 Mundelsheim (DE)**
Erfinder: **KOCH, Siegfried
In Geren 10
D-7730 Villingen-Schwenningen (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine mehrstellige, mittels Lichtquellen (54) ausleuchtbare, elektronische Anzeigevorrichtung (3) in einem Kraftfahrzeug, beispielsweise für einen Taxameter, zur Anzeige eines zu bezahlenden Fahrpreises und eventuell anfallenden Zuschlagbetrages sowie zur Einblendung von Speicher und Tarifdaten, mit einer transflektorischen Flüssigkristallanzeige (37) (LCD) und einem Rahmen (38) zur gemeinsamen Aufnahme der Flüssigkristallanzeige (37), eines Lichtzuführungsmittels (43) und von Kontaktelementen (39) zur elektrischen Verbindung der Flüssigkristallanzeige (37) mit Ansteuerleitungen (40) auf einer Leiterplatte (2), wobei der Rahmen (38) einen mit Zentrierbohrungen (46, 47) versehenen Zwischenboden (44) aufweist, der der lagerichtigen Aufnahme des Lichtzuführungsmittels (43) dient und der nach zwei Seiten geöffnet ist zur Ausbildung eines Lichtleitkanals (52, 53) zu beidseitig angeformten Lichtquellenkammern (50, 51).

Elektronische Anzeigevorrichtungen zur Darstellung von Ziffern und Zeichen sind seit Jahren bekannt und sind nicht zuletzt im Hinblick auf den Anwendungsfall von unterschiedlicher Struktur und Wirkungsweise. Eine verbreitete Ausführungsform stellt die Flüssigkristallanzeige (LCD) dar, die in einem typischen Anwendungsfall als 7-Segment-Display in Geräten mit digitaler Anzeige eingesetzt wird. Das Grundprinzip einer Flüssigkristallzelle besteht bekanntlich darin, daß zwei Glasplatten an den einander zugekehrten Flächen mit transparenten, leitenden Schichten bedeckt sind, die entsprechend der gewünschten Anzeigekonfiguration maskiert sind. In einer Zelle zwischen den Glasplatten befindet sich eine nematische, kristalline Flüssigkeit, die beim Anlegen einer Spannung an die Dünnschichtelektroden unter dem Einfluß des elektrischen Feldes Zonen mit verschiedenem Brechungsindex bilden. Je nach Ausbildung der Struktur der einen transparenten Elektrode läßt sich die Flüssigkristallzelle zur Darstellung von Ziffern, Buchstaben oder sonstigen Informationszeichen verwenden. Abhängig von den Betriebsarten unterscheidet man zwischen Reflexionsbetrieb, Durchlicht- oder transmissivem Betrieb und einem Transflexionsbetrieb. Beim Reflexionsbetrieb erfolgt die Ausleuchtung der reflektiven Anzeige durch das vorhandene Umlicht, indem auf der Rückseite der Zelle ein Spiegel angebracht ist. Beim Durchlichtbetrieb einer Flüssigkristallzelle befindet sich die Lichtquelle auf der Rückseite hinter dem Anzeigeelement. Durch die Anordnung eines Diffusors zwischen Lichtquelle und Flüssigkristallzelle ist dafür gesorgt, daß das Licht möglichst ideal absorbiert wird.

Bei einem transflektorischen Betrieb befindet sich auf der Rückseite der Flüssigkristallzelle ein halbdurchlässiger Spiegel, der einerseits das Umlicht reflektiert, andererseits jedoch ausreichend lichtdurchlässig ist, so daß durch die eingeschaltete Lichtquelle im Diffusor die Flüssigkristallzelle ausgeleuchtet wird. Ein Wechsel zwischen den dabei wirksamen Betriebsarten mit Durchlicht und Reflexion erfolgt selbsttätig in Abhängigkeit von der Beleuchtungsstärke des Umfeldes. Das bedeutet bei einer Umfeldbeleuchtungsstärke, die höher ist als die der eingebauten Hintergrundbeleuchtung, stellt sich ein Reflexionsbetrieb ein, im umgekehrten Fall arbeitet die Flüssigkristallzelle im Durchlichtbetrieb. Eine derartige Flüssigkristallanzeige eignet sich für Anwendungsfälle, bei denen eine Hintergrundbeleuchtung dauernd eingeschaltet ist, oder aber für Ausführungsformen, bei denen die Hintergrundbeleuchtung durch den Betrachter bedarfsmäßig zuschaltbar ist. Der transflektorische Betrieb einer Flüssigkristallanzeige mit im Betriebszustand dauernd eingeschalteter Hintergrundbeleuchtung bietet durch die Eigenschaft eines automatischen Wechsels auf die optimale Betriebsart in Abhängigkeit der momentanen Beleuchtungsstärke den erheblichen Vorteil, daß sich die angezeigten Symbole stets mit der größtmöglichen Kontrastbildung gegen den Hintergrund abzeichnen. Dadurch bleibt die Lesefähigkeit eines Anzeigefeldes selbst bei sich ständig ändernden Umlichtverhältnissen konstant. Insofern spricht diese Eigenschaft für eine Anwendung im Kraftfahrzeug als Taxameter-Display, wenn es gelingt, durch eine sinnvolle Anordnung und Ausbildung des Anzeigefeldes die Erfordernisse im Taxifahrzeug zu erfüllen.

In der US-A-4 247 928 ist ein Modul für eine Zeituhr beschrieben, bei dem eine Schale aus lichtdurchlässigem Plastikmaterial vorgesehen ist, in die die elektro-optische Anzeige eingelegt wird. Die Schale dient als Lichtleitmittel, um das Uhrdisplay über die ganze Fläche der Schale hinter dem Uhrdisplay mit indirektem Hintergrundlicht auszuleuchten.

Bei der aus der DE-A-32 47 531 bekannten Anzeigevorrichtung handelt es sich um ein Vielfachanzeigeinstrument entsprechend einer vollständigen Kraftfahrzeugarmatur. Die Explosivdarstellung der Anzeigevorrichtung läßt erkennen, daß das Anzeigegerät sich aus einer Vielzahl von Funktionselementen zusammensetzt, die bei dem Zusammenbau große Sorgfalt und Zeitaufwand erfordern. Aufgrund der durch Schraubverbindungen miteinander verbindbaren Montageebenen ist eine exakte Kontaktierung zwischen den Baugruppen nicht unbedingt gewährleistet, und es sind zusätzliche Justierarbeiten und Schaltungsprüfroutinen erforderlich. Die Anordnung und der Aufwand für die Erzeugung und Verteilung der Lichtstrahlen auf die Flüssigkristallanzeige ist umständlich, da das seitlich eingeführte Licht über die inneren Wände eines rahmenartigen Trägers und eine gesondert angeordnete Reflektorplatte auf die Flüssigkristallelemente zurückgestrahlt wird.

Aufgabe der Erfindung ist es, eine mehrstellige, mittels Lichtquellen ausleuchtbare, elektronische Anzeigevorrichtung der eingangs bezeichneten Art so weiterzubilden, daß sie aus einfachen Teilen komplettierbar und durch geeignete Verbindungen als eine Einheit auf eine Leiterplatte aufsteckbar ist, womit gleichzeitig die Ansteuerleitungen mit der Leiterplatte verbindbar sind und eine raumsparende Anordnung zur optimalen Ausleuchtung der darstellbaren Informationen gewährleistet ist.

Die Lösung dieser Aufgabe besteht darin, daß das Lichtzuführungsmittel (43) eine zwischen der Flüssigkristallanzeige (37) und dem Zwischenboden (44) angeordnete Lichtleitplatte (43) ist, in deren Seitenflächen (55, 56) die von den Lichtquellen (54) ausgesandten Lichtstrahlen (57) eingekoppelt und an deren zur Flüssigkristallanzeige (37) gerichteten Oberfläche (65) die Lichtstrahlen (57) gestreut werden und daß die Anzeigevorrichtung (3) mittels einer den Rahmen (38) umfassenden, mit Rastelementen (41) versehenen Haube (42) unter gleichzeitiger Herstellung aller Leitungsverbindungen lagerichtig auf die Leiterplatte (2) aufsteckbar und mit dieser verrastbar ist.

Ein wesentlicher Vorteil der Erfindung liegt darin, daß eine transflektorische Flüssigkristallanzeige verwendet wird, die bei einer geeigneten Ausnutzung der Umlichtverhältnisse im Reflexionsbetrieb und bei einer zusätzlichen Versorgung durch eine eingebaute Lichtquelle für den Durchlichtbetrieb eine weitgehend konstante Kontrastbildung zwischen Hintergrund und den abzubildenden Zeichen gewährleistet. Im Sinne einer raumsparenden Ausbildungsform wird ein Rahmen vorgeschlagen, der gleichzeitig der Aufnahme der Flüssigkristallanzeige, einer Lichtleitplatte sowie mehreren Kontaktelementen dient, die als Interkonnektoren im Einbauzustand die Ansteuerleitungen auf der Leiterplatte mit der Flüssigkristallanzeige verbinden. Der Rahmen weist einen Zwischenboden auf, der einmal der Aufnahme einer Lichtleitplatte dient, zum anderen einen Hohlraum schafft zur Leiterplatte hin und damit die Möglichkeit einer beidseitigen Bestückung der Leiterplatte mit Bauteilen schafft. Zur Begünstigung einer Flachbauweise sind die für die Hintergrundbeleuchtung oder das Durchlicht verantwortlichen Lichtquellen beiderseits in Höhe der Stirnflächen der Anzeigevorrichtung auf der Leiterplatte angeordnet und durch Lichtquellenkammern abgeschottet, derart daß ein Lichtstrahlengang durch die Lichtleitplatte und eine durchscheinende Deckplatte gezielt auf die auszuleuchtenden Flächen gestreut wird. Die Lichtleitplatte weist aufgrund einfacher Maßnahmen zwei Lichtleitzonen auf, einmal für eine gleichmäßige Flächenverteilung von Durchlicht auf die Flüssigkristallanzeige, zum zweiten dient sie gleichzeitig über eine Lichtleitzone im Randbereich der Lichtleitplatte der Ausleuchtung von entsprechend davor im Schriftblatt angeordneten, transparenten Schriftzeichen. Um eine gleichmäßige Ausleuchtung der ganzen Fläche der Flüssigkristallanzeige zu erzielen, besteht die Lichtleitplatte aus prismatischen, von den beiden Seiten der Lichtquelle nach innen verlaufenden Lichtleitkörpern, deren Oberflächen mattiert sind. Durch entsprechende Gestaltung der Oberfläche beispielsweise mit Sägezahnprofil, prismatischer Oberfläche und dergl. sind auch gemusterte Effekte in der beleuchteten Fläche in der Art von Streifenmustern, Lichtpunkte mit optisch leichten Hell-Dunkel-Zonen erzielbar, oder aber es sind Bereiche auf dem Display derart ausleuchtbar, daß sie durch eine differentierbare Hell-Dunkel-Ausleuchtung eine gewisse Abgrenzung erfahren, beispielsweise zur Hervorhebung einer unterschiedlichen Bedeutung der Anzeigebereiche. Schließlich ist die vollständige Anzeigevorrichtung als leiterplattenspezifische Baugruppe ausgestaltet, indem der Rahmen als Aufnahmeelement der Flüssigkristallanzeige, der Lichtleitplatte und nicht zuletzt von Leitgummiverbindern als Interkonnektoren zur Leiterplatte mit Zentrierzapfen versehen ist, die in entsprechend in der Leiterplatte vorgesehenen Bohrungen eintauchen und so eine absolut unverwechselbare Verbindung zwischen den Leiterbahnen auf der Leiterplatte und den Zeichenansteuerleitungen an der Flüssigkristallanzeige gewährleistet. Ohne eine Notwendigkeit aufwendiger Lötverbindungen oder Montagevorgänge wird der Rahmen samt den eingelegten Bauteilen mit einer alle Teile umfassenden, mit Rastelementen versehenen Haube auf die Leiterplatte aufgesteckt. Die Gestaltung der gesamten Baugruppe der elektronischen Anzeigevorrichtung ist somit äußerst servicefreundlich realisiert, indem ein Austausch von Teilen derselben lediglich durch Ausklinken der Rastelemente durchführbar ist und auch der Zugang zu den auf der Leiterplatte angeordneten Bauteilen ohne einen werkzeugbedingten Aufwand möglich ist.

Ein Ausführungsbeispiel der Erfindung ist nachfolgend beschrieben und anhand der Zeichnungen dargestellt.

Es zeigt

Fig. 1 einen vollständigen Taxameter in Explosionsdarstellung, bestehend aus einer frontseitig angeordneten Gehäuseschale, einer komplettierten, elektrischen Schaltungsanordnung inklusive der Anzeigevorrichtung und einer hinteren Gehäuseschale,

Fig. 2 eine Leiterplatte als Systemträger für die Schaltung und die Anzeigevorrichtung, wobei letztere in Explosionsdarstellung gezeigt wird,

Fig. 3 eine Explosionsdarstellung des vollständigen Taxameters in Seitenansicht, teilweise im Schnitt.

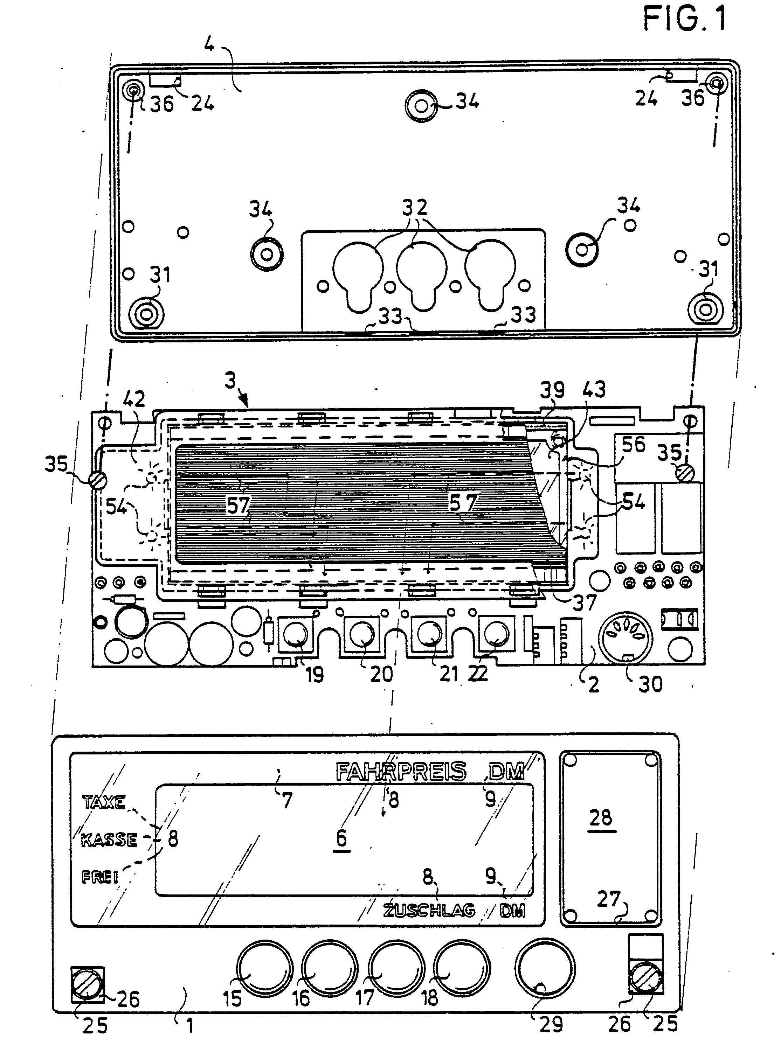

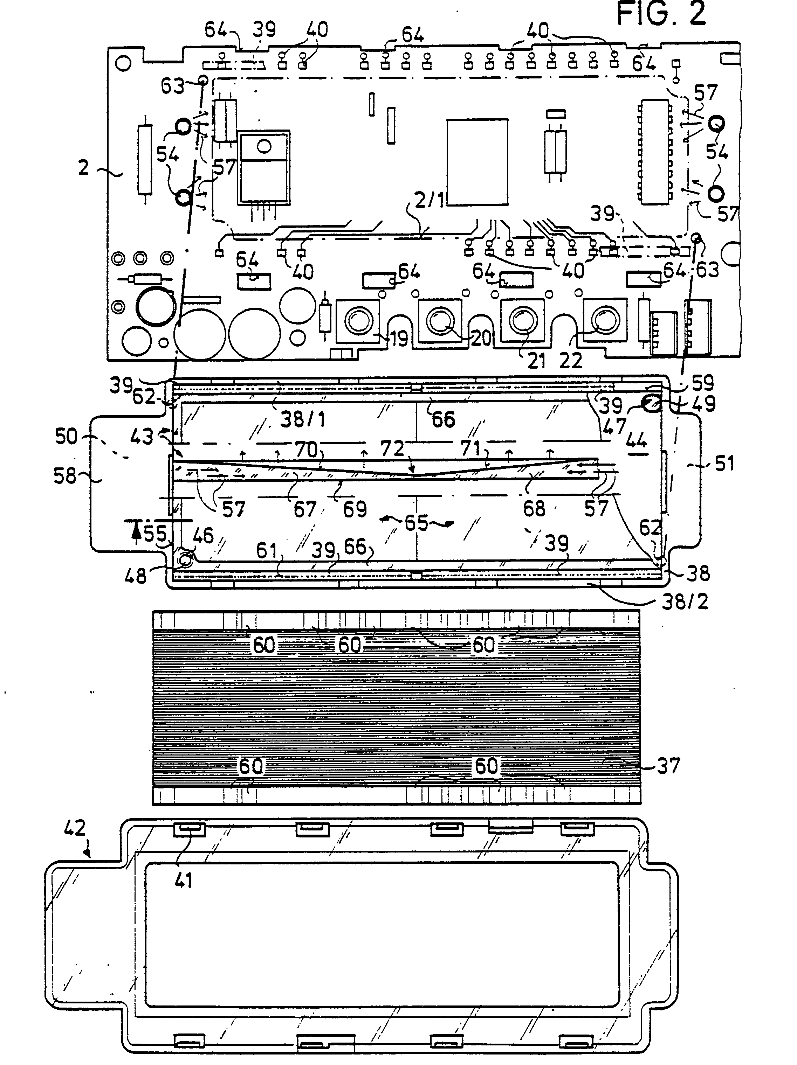

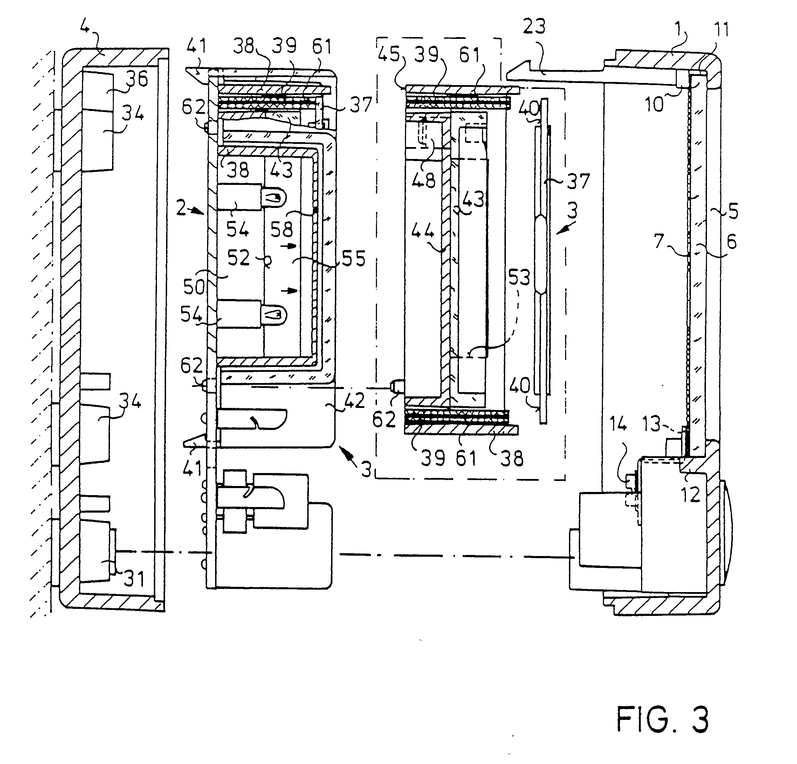

In Fig. 1 ist ein vollständiger Taxameter in Explosionsdarstellung gezeigt. Danach besteht der Taxameter im wesentlichen aus drei komplettierten Baugruppen, nämlich aus der frontseitigen Gehäuseschale 1, einer vollständig bestückten Leiterplatte 2 einschl. einer Anzeigevorrichtung 3 und schließlich einer hinteren Gehäuseschale 4, die Mittel für eine Kabelzuführung und eine Befestigung des Taxameters im Kraftfahrzeug aufweist. In der frontseitigen Gehäuseschale 1 ist ein Durchbruch 5 vorgesehen, in den eine durchsichtige Scheibe 6 eingelegt ist, hinter welcher noch ein Schriftblatt 7 mit durchscheinenden Schriftzeichen 8 und Symbolen 9 zur Kennzeichnung der durch die Anzeigevorrichtung 3 einblendbaren Informationen angeordnet ist. Die Scheibe 6 und das Schriftblatt 7 werden zusammen in eine durch vorspringende Nasen 10 an der Gehäuseinnenwand gebildete Nut 11 gesteckt und durch einen vorspringenden Rand 12 an der Gehäuseschale 1 in der richtigen Funktionslage gehalten. Gesichert werden die Scheibe 6 und das Schriftblatt 7 durch einen einfachen Blechwinkel 13, der mit einer Schraube 14 an der Gehäuseschale 1 befestigt ist (Fig. 3). In die frontseitige Gehäuseschale 1 sind vier Drucktasten 15, 16, 17, 18 eingebaut, die bei geschlossenem Gehäuse entsprechend auf vier Schalter 19, 20, 21, 22 auf der Leiterplatte 2 wirken. Die Gehäuseschale 1 besitzt an der oberen Wand Rastarme 23, die beim Zusammenfügen in Ausschnitte 24 der Gehäuseschale 4 einrasten. Gegen unbefugtes Öffnen sind die Gehäuseschalen 1 und 4 mit Schrauben 25, die in Plombenschalen 26 eingelegt werden und die in Gewindesockel 31 in der hinteren Gehäuseschale 4 eingeschraubt werden, gesichert. In einer Ausnehmung 27 auf der Frontseite der Gehäuseschale 1 ist ein Typenschild 28 mit gerätespezifischen Angaben eingenietet. Schließlich ist eine Bohrung 29 vorgesehen, durch welche von außen eine Steckverbindung zu einer mehrpoligen Buchse 30 auf der Leiterplatte 2 herstellbar ist. In der hinteren Gehäuseschale 4 sind sowohl nach hinten als auch nach unten Kabeldurchführungen 32, 33 angegeben, die als Soll-Bruchzonen ausgebildet sind und im Bedarfsfalle herausbrechbar sind. Eine Befestigung des Gerätes im Kraftfahrzeug erfolgt mittels Schrauben durch verstärkte Sockel 34 auf der Rückwand der hinteren Gehäuseschale 4. Die komplettierte Leiterplatte 2, wie in Fig. 1 angezeigt ist, wird in die hintere Gehäuseschale 4 eingelegt und mit zwei Schrauben 35 auf den Gewindesockeln 36 befestigt. In Fig. 1 und 3 ist die Anzeigevorrichtung 3 im eingebauten Zustand dargestellt, und, wie dort erkennbar ist und gesondert in Fig. 2 dargestellt ist, setzt sich die Anzeigevorrichtung 3 zusammen aus einer transflektorischen Flüssigkristallanzeige (LCD) 37, aus einem Rahmen 38 zur gemeinsamen Aufnahme der Flüssigkristallanzeige 37, einer Lichtleitplatte 43, Kontaktelementen 39 zur Verbindung der Flüssigkristallanzeige 37 mit Ansteuerleitungen 40 auf der Leiterplatte 2. Mit einer den Rahmen 38 umfassenden, mit Rastelementen 41 versehenen Haube 42 ist die Anzeigevorrichtung 3 unter gleichzeitiger Herstellung aller Leitungsverbindungen lagerichtig auf die Leiterplatte 2 aufsteckbar und mit dieser verrastbar. Der Rahmen 38 weist einen Zwischenboden 44 auf, der in einem Abstand zur Auflagekante 45 des Rahmens 38 auf der Leiterplatte 2 angeordnet ist, so daß auch in diesem Bereich die Fläche 2/1 der Leiterplatte 2 für eine beidseitige Bestückung mit Bauteilen nutzbar ist. Im Zwischenboden 44 sind Zentrierbohrungen 46, 47 vorgesehen, die einer lagerichtigen Aufnahme der Lichtleitplatte 43, an welcher zu diesem Zweck Führungszapfen 48, 49 angeformt sind, dienen. An beiden Seiten des Rahmens 38 sind Lichtquellenkammern 50, 51 angeformt, die vor dem Zwischenboden 44 nach innen geöffnet sind, derart daß von beiden Seiten jeweils ein Lichtleitkanal 52, 53 entsteht, durch welchen die von je zwei auf der Leiterplatte 2 angeordneten Lampen 54 erzeugten Lichtstrahlen 57 über die seitlichen Flächen 55, 56 der eingelegten Lichtleitplatte 43 einkoppelbar sind.

Die Lichtquellenkammer 50 weist eine lichtdurchlässige Deckplatte 58 auf. Das durch die Deckplatte 58 durchscheinende, diffuse Licht dient der Ausleuchtung von davor in dem Schriftblatt 7 angeordneten, lichtdurchlässigen Schriftzeichen 8.

Zwischen dem Zwischenboden 44 und dem peripheren Rahmen 38/1 und 38/2 an der oberen und unteren Längskante des Rahmens 38 sind Durchbrüche 59 vorgesehen, in die von der Hinterseite nach der Vorderseite des Rahmens 38 hindurchreichende Kontaktelemente 39 einlegbar sind. Als Kontaktelemente 39 sind Leitgummiverbinder oder handelsüblich als Interkonnektoren bezeichnete Bauelemente vorgesehen. Wie insbesondere aus den Fig. 2 und 3 erkennbar ist, ist durch das Einlegen der Flüssigkristallanzeige 37 in den Rahmen 38 und auf die etwas überstehenden, aus elastisch verformbarem Material bestehenden Leitgummiverbinder 38 eine direkte, leitende Verbindung aller LCD-Ansteuerelektroden 60 mit entsprechend auf der Leiterplatte 2 angeordneten Ansteuerleitungen 40 herstellbar. Hierzu sind die LCD-Ansteuerelektroden 60 auf der Innenseite der Frontglasplatte der Flüssigkristallanzeige 37 nach außerhalb der Flüssigkristallzelle geführt und liegen mit etwas Anpreßdruck auf der elektrisch anisotropen Schicht 61 des Leitgummiverbinders 39 auf. Über die in eine Richtung leitende Schicht 61 wird eine Signalverbindungsleitung zu der entsprechend zugeordneten Ansteuerleitung 40 auf der Leiterplatte 2 hergestellt. Damit eine korrekte Zuordnung der LCD-Ansteuerelektroden 60 über die Leitgummiverbinder 39 zu den Ansteuerleitungen 40 auf der Leiterplatte 2 stattfindet, sind an der Hinterseite des Rahmens 38 Zentrierzapfen 62 vorgesehen, die in Bohrungen 63 auf der Leiterplatte 2 eintauchen und eine lagerichtige Plazierung der gesamten Anzeigevorrichtung 3 auf der Leiterplatte 2 gewährleisten. Befestigt wird der Rahmen 38 mit einer den Rahmen 38 und die darin eingelegte Flüssigkristallanzeige 37 umfassenden Haube 42, indem die an den Längsseiten an federnden Armen ausgebildeten Rastelemente 41 in entsprechend in der Leiterplatte 2 vorgesehene Ausschnitte 64 eingeführt werden und verrasten. Dabei wird der mit Übermaß über den Rahmen 38 vorstehende Leitgummiverbinder 39 etwas zusammengepreßt zur Verbesserung der leitenden Verbindung an den Kontaktstellen des Leitgummiverbinders 39 zu den LCD-Ansteuerelektroden 60 einerseits und den Ansteuerleitungen 40 auf der Leiterplatte 2 andererseits.

Die Lichtleitplatte 43 weist zwei Lichtleitzonen 65, 66 auf, wobei eine Lichtleitzone 65 für eine gleichmäßige Flächenverteilung von Durchlicht auf die Flüssigkristallanzeige 37 aufgrund der seitlichen Einkopplung von Lichtstrahlen 57 durch die Lampen 54 ausgebildet ist, eine zweite Lichtleitzone 66 im Randbereich der Lichtleitplatte 43 angeordnet ist zur Ausleuchtung von entsprechend davor gesetzten transparenten Schriftzeichen 8 und Symbolen 9 in einem opaken Schriftblatt 7. Für eine gleichmäßige Ausleuchtung der Fläche der Flüssigkristallanzeige 37 mit Durchlicht weist die Lichtleitplatte 43 prismatisch von der Anordnung der Lampen 54 als Lichtquellen nach innen verlaufende glasklare Lichtleitkörper 67, 68 auf. Die stirnseitigen Flächen 55, 56, die der Einkopplung der Lichtstrahlen 57 dienen, sowie die Rückseite 69 der Lichtleitplatte 43 sind glasklar und poliert zur Unterstützing der Reflexion der Lichtstrahlen 57 in Durchlichtrichtung auf die Flüssigkristallanzeige 37. Die Oberflächen 70, 71 der Lichtleitkörper 67, 68 sind im Durchlichtbereich mattiert und fließen in der Übergangszone über eine Rundung 72 ineinander über. Die Mattierung auf den Oberflächen 70, 71 dient der Diffusion und damit einer gleichmäßigen Streuung der Lichtstrahlen 57. Durch die Rundung 72 an der Übergangszone wird eine unterschiedliche Helligkeitszone in diesem Bereich weitgehend vermieden. Statt der Oberflächen-Mattierung der Lichtleitkörper 67, 68 sind auch strukturelle Ausbildungsvarianten denkbar. So lassen sich beispielsweise durch Sägezahnprofile oder durch Katzenaugenprofile gezielte Muster in der Ausleuchtung der Anzeigevorrichtung 3, wie Streifenmuster oder Punktemuster, mit Hell-Dunkel-Effekt erzielen. Zur Unterstützung der Lichtreflexionseffekte ist der die Lichtleitplatte 43 umgebende Rahmen 38 aus einem hellfarbenen, möglichst weißen Material gefertigt. Die Haube 42 ist aus transparentem Material gefertigt, so daß der durchscheinende Lichteffekt aus der Lichtquellenkammer 50 und der Lichtleitzone 66 der Lichtleitplatte 43 der Ausleuchtung der Schriftblattinformationen dienen kann. Aufgrund der konstruktiven Gestaltung der zusammensteckbaren Teile sowie einer optimalen Anordnung in einem Rahmen 38 ist eine lagerichtige Zuordnung aller Teile zueinander gewährleistet. Durch Zentrierzapfen 62 und entsprechend vorgesehene Bohrung 63 in der Leiterplatte 2 ist eine exakte Plazierung auf der Leiterplatte 2 insbesondere in bezug auf die Kontaktierung zwischen den Ansteuerelektroden 60 der Flüssigkristallanzeige 37 und den Ansteuerleitungen 40 auf der Leiterplatte automatisch gesichert. Schließlich ist es aufgrund der mittels Rastelementen 41 befestigbaren, alle Teile der Anzeigevorrichtung 3 umfassenden Haube 42 gelungen, eine leiterplattenspezifische Ausbildung einer kompletten Anzeigevorrichtung 3 zu schaffen, die als steckbare Baugruppe mit gleichzeitiger Herstellung aller Leitungsverbindungen anwendbar ist.

**Patentansprüche**

1. Mehrstellige, mittels Lichtquellen (54) ausleuchtbare, elektronische Anzeigevorrichtung (3) in einem Kraftfahrzeug, beispielsweise für einen Taxameter, zur Anzeige eines zu bezahlenden Fahrpreises und eventuell anfallenden Zuschlagbetrages sowie zur Einblendung von Speicher- und Tarifdaten, mit

einer transflektorischen Flüssigkristallanzeige (37) (LCD) und

einem Rahmen (38) zur gemeinsamen Aufnahme der Flüssigkristallanzeige (37), eines Lichtzuführungsmittels (43) und von Kontaktelementen (39) zur elektrischen Verbindung der Flüssigkristallanzeige (37) mit Ansteuerleitungen (40) auf einer Leiterplatte (2), wobei der Rahmen (38) einen mit Zentrierbohrungen (46, 47) versehenen Zwischenboden (44) aufweist, der der lagerichtigen Aufnahme des Lichtzuführungsmittels (43) dient und der nach zwei Seiten geöffnet ist zur Ausbildung eines Lichtleitkanals (52, 53) zu beidseitig angeformten Lichtquellenkammern (50, 51),

dadurch gekennzeichnet, daß das Lichtzuführungsmittel (43) eine zwischen der Flüssigkristallanzeige (37) und dem Zwischenboden (44) angeordnete Lichtleitplatte (43) ist, in deren Seitenflächen (55, 56) die von den Lichtquellen (54) ausgesandten Lichtstrahlen (57) eingekoppelt und an deren zur Flüssigkristallanzeige (37) gerichteten Oberfläche (65) die Lichtstrahlen (57) gestreut werden, und

daß die Anzeigevorrichtung (3) mittels einer den Rahmen (38) umfassenden, mit Rastelementen (41) versehenen Haube (42) unter gleichzeitiger Herstellung aller Leitungsverbindungen lagerichtig auf die Leiterplatte (2) aufsteckbar und mit dieser verrastbar ist.

2. Anzeigevorrichtung nach Anspruch 1, dadurch gekennzeichnet, daß die Lichtquellenkammer (50) eine lichtdurchlässige Deckplatte (58) aufweist zur Ausleuchtung von davor in einem Schriftblatt (7) angeordneten, lichtdurchscheinenden Schriftzeichen (8).

3. Anzeigevorrichtung nach Anspruch 1, dadurch gekennzeichnet, daß zwischen dem Zwischenboden (44) und den peripheren Rahmen (38/1 und 38/2) Durchbrüche (59) vorgesehen sind, in die von der Hinterseite nach der Vorderseite des Rahmens (38) hindurchreichende Kontaktelemente (39) einlegbar sind.

4. Anzeigevorrichtung nach Anspruch 3, dadurch gekennzeichnet, daß die Kontaktelemente (39) Leitgummiverbinder (Interconnectoren) sind.

5. Anzeigevorrichtung nach Anspruch 4, dadurch gekennzeichnet, daß an der Hinterseite des Rahmens (38) Zentrierzapfen (62) vorgesehen sind, die in Bohrungen (63) auf der Leiterplatte (2) eintauchen zur lagerichtigen Plazierung der Leitgummiverbinder (39) mit auf der Leiterplatte (2) angeordneten Ansteuerleitungen (40).

6. Anzeigevorrichtung nach Anspruch 5, dadurch gekennzeichnet, daß durch ein Einlegen der Flüssigkristallanzeige (37) in den Rahmen

(38) und auf die Leitgummiverbinder (39) eine direkte, leitende Verbindung aller LCD-Ansteuerelektroden (60) mit entsprechend auf der Leiterplatte (2) angeordneten Ansteuerleitungen (40) herstellbar ist.

7. Anzeigevorrichtung nach Anspruch 1, dadurch gekennzeichnet, daß die Lichtleitplatte (43) zwei Lichtleitzonen (65, 66) aufweist, wobei eine Lichtleitzone (65) für eine gleichmäßige Flächenverteilung von Durchlicht auf die Flüssigkristallanzeige (37) ausgebildet ist, eine zweite Lichtleitzone (66) im Randbereich der Lichtleitplatte (43) der Ausleuchtung von entsprechend davor angeordneten Schriftzeichen (8) und Symbolen (9) auf dem Schriftblatt (7) dient.

8. Anzeigevorrichtung nach Anspruch 7, dadurch gekennzeichnet, daß für eine gleichmäßige Ausleuchtung der Fläche der Flüssigkristallanzeige (37) die Lichtleitplatte (43) aus prismatisch von den Lichtquellenkammern (50, 51) nach innen verlaufenden, glasklaren Lichtleitkörpern (67, 68) besteht, deren Oberflächen (70, 71) im Durchlichtbereich mattiert und in der Übergangszone verrundet sind.

**Claims**

1. Multi-character, electronic display device (3), able to be illuminated by means of light sources (54), in a vehicle, for example for a taximeter, for displaying a fare to be paid and any excess fare possibly incurred and for calling up memory and tariff data, with

a transflective liquid crystal display (37) (LCD) and

a frame (38) for jointly receiving the liquid crystal display (37), a light-supply means (43) and contact members (39) for the electrical connection of the liquid crystal display (37) to control lines (40) on a printed circuit board (2), the frame (38) comprising an intermediate base (44) provided with centering bores (46, 47), which base (44) serves for receiving the light-supply means (43) in the correct position and which is open on two sides to form a light guide channel (52, 53) to light source chambers (50, 51) attached on both sides,

characterised in

that the light-supply means (43) is a light guide plate (43) located between the liquid crystal display (37) and the intermediate base (44), in the side faces (55, 56) of which plate the light beams (57) emitted by the light sources (54) are introduced and on whose surface (65) directed towards the liquid crystal display (37) the light beams (57) are scattered and

that the display device (3) can be fitted in the correct position to the printed circuit board (2) and can be locked thereto by means of a cover (42) surrounding the frame (38) and provided with locking members (41), with the simultaneous establishment of all circuit connections.

2. Display device according to Claim 1, characterised in that the light source chamber (50) comprises a light-transmitting covering plate (58) for the illumination of transparent characters (8) located in a character sheet (7) in front thereof.

3. Display device according to Claim 1, characterised in that openings (59) are provided between the intermediate base (44) and the peripheral frame (38/1 and 38/2), in which openings (59) contact elements (39) extending from the rear side to the front side of the frame (38) can be inserted.

4. Display device according to Claim 3, characterised in that the contact elements (38) are conductive rubber connectors (interconnectors).

5. Display device according to Claim 4, characterised in that provided on the rear side of the frame (38) are centering lugs (62), which engage in bores (63) on the printed circuit board (2) for the correct positioning of the conductive rubber connectors (39) with control lines (40) located on the printed circuit board (2).

6. Display device according to Claim 5, characterised in that by introducing the liquid crystal display (37) into the frame (38) and onto the conductive rubber connectors (39), a direct, conducting connection of all LCD-control electrodes (60) to control lines (40) correspondingly located on the printed circuit board (2) can be established.

7. Display device according to Claim 1, characterised in that the light guide plate (43) comprises two light guide areas (65, 66), one light guide area (65) being constructed for a uniform surface distribution of transmitted light to the liquid crystal display (37), a second light guide area (66) in the edge region of the light guide plate (43) serving for the illumination of characters (8) and symbols (9) on the character sheet (7) each located in front thereof.

8. Display device according to Claim 7, characterised in that for a uniform illumination of the surface of the liquid crystal display (37), the light guide plate (43) consists of clear glass light-guiding members (67, 68) extending prismatically from the light source chambers (50, 51) towards the inside, the surfaces (70, 71) of which members are frosted in the transmitted light range and rounded in the transition area.

**Revendications**

1. Dispositif d'affichage électronique (3) à plusieurs décades, pouvant être éclairé au moyen de sources lumineuses (54) dans un véhicule automobile, par exemple pour un taximètre, pour l'affichage d'un prix de course à régler et du montant d'un supplément éventuel ainsi que pour la surimpression de données de mémoire et de tarif, avec

un afficheur à cristaux liquides (37) (LCD) éclairé par transparence et par réflexion, et

un cadre (38) pour recevoir, en commun, ledit afficheur à cristaux liquides (37), un moyen d'acheminement de la lumière (43) et des éléments de contact (39) pour le raccordement électrique dudit afficheur à cristaux liquides (37) à des lignes d'attaque (40) disposées sur une plaquette à circuits imprimés (2), le cadre (38) présentant un fond intermédiaire (44) doté d'alésages de centrage (46, 47), qui sert à la réception, en position correcte, du moyen d'acheminement de la lumière (43) et qui est ouvert des deux côtés pour la réalisation d'un canal conducteur lumineux (52, 53) allant vers des chambres à source lumineuse (50, 51) formées des deux côtés,
caractérisé par le fait,

que le moyen d'acheminement de lumière (43) est une plaque conductrice lumineuse (43) disposée entre l'afficheur à cristaux liquides (37) et le fond intermédiaire (44) dans les faces latérales (55, 56) de laquelle sont injectés les rayons lumineux (57) émis par les sources lumineuses (54) et sur la face supérieure (65) de laquelle, qui est dirigée vers l'afficheur à cristaux liquides (37), sont diffusés les rayons lumineux (57) et

que le dispositif d'affichage (3) peut être enfiché, en position correcte, avec établissement simultané de toutes les connexions de ligne, sur la plaquette circuits imprimés (2) et être verrouillé avec celle-ci au moyen d'un capot (42) entourant le cadre (38) et étant équipé d'éléments d'arrêt (41).

2. Dispositif d'affichage selon la revendication 1, caractérisé par le fait, que la chambre à source lumineuse (50) présente une plaque de recouvrement (58) transparente pour l'éclairement des caractères (8) translucides disposés, devant, dans une face de taximètre (7).

3. Dispositif d'affichage selon la revendication 1, caractérisé par le fait que, entre le fond intermédiaire (44) et le cadre périphérique (38/1 et 38/2) sont prévus des percements (59) dans lesquels il est possible d'insérer des éléments de contact (39) s'étendant de la face postérieure à la face antérieure du cadre (38).

4. Dispositif d'affichage selon la revendication 3, caractérisé par le fait que les éléments de contact (39) sont des connecteurs en caoutchouc conducteur (interconnecteurs).

5. Dispositif d'affichage selon la revendication 4, caractérisé par le fait que sur la face postérieure du cadre (38) sont prévus des tenons de centrage (62) qui pénètrent dans les alésages (63) sur la plaquette à circuits imprimés (2) pour le positionnement correct des connecteurs en caoutchouc conducteur (39) avec des lignes d'attaque (40) disposées sur la plaquette à circuits imprimés (2).

6. Dispositif d'affichage selon la revendication 5, caractérisé par le fait que, en insérant l'afficheur à cristaux liquides (37) dans le cadre (38) et en le faisant poser sur les connecteurs en caoutchouc conducteur (39), il est possible d'établir une connexion conductrice directe de toutes les électrodes d'attaque LCD (60) avec les lignes d'attaque (40) disposées en conséquence sur la plaquette à circuits imprimés (2).

7. Dispositif d'affichage selon la revendication 1, caractérisé par le fait que la plaque conductrice lumineuse (43) présente deux zones conductrices lumineuses (65, 66), l'une des zones conductrices lumineuses (65) étant formée pour une distribution superficielle homogène de la lumière transmise à l'afficheur à cristaux liquides (37) alors qu'une deuxième zone conductrice lumineuses (66) dans la région marginale de la plaque conductrice lumineuse (43) sert à l'éclairement de caractères (8) et symboles (9) disposés, devant, en conséquence, sur la face de taximètre (7).

8. Dispositif d'affichage selon la revendication 7, caractérisé par le fait que, pour un éclairement homogène de la surface de l'afficheur à cristaux liquides (37), la plaque conductrice lumineuse (43) est composée de corps conducteurs lumineux (67, 68) clairs comme du cristal s'étendant, en forme de prismes, des chambres à source lumineuse (50, 51) vers l'intérieur et dont les surfaces (70, 71) sont dépolies dans la zone de la lumière transmise et arrondies dans la zone transitoire.

FIG. 1

FAHRPREIS DM
TAXE
KASSE
FREI
ZUSCHLAG DM

FIG. 2
64
39
40
64
40
64
63
57
54
2
54
57
2/1
39
57
64
40
64
64
40
64
63
19
20
21
22
39
62
38/1
66
39
59
49
47
50
43
44
51
58
70
72
71
57
67
69
68
57
55
65
62
46
61
39
66
39
48
38
38/2
60
60
60
37
60
60
42
41

4
36
34
34
31
41
38
39
61
62
37
38
43
2
54
58
52
55
50
54
62
42
41
3
45
39
61
48
43
44
53
62
39
61
38
40
37
3
40
23
1
11
10
5
7
6
14
13
12


FIG. 3